# EUROPÄISCHE PATENTSCHRIFT

(11) **EP 0 742 363 B1**
(45) Veröffentlichungstag und Bekanntmachung des Hinweises auf die Patenterteilung: **12.07.2000**
(21) Anmeldenummer: 95810314.5
(22) Anmeldetag: 10.05.1995
(51) Int. Cl.: F02M 25/022

(54) **Verfahren und Vorrichtung zum Mischen und Fördern einer Emulsion für eine Dieselbrennkraftmaschine**
Method and device for mixing and feeding an emulsion for a Diesel engine
Procédé et dispositif pour mélanger et alimenter une émulsion pour un moteur Diesel

(43) Veröffentlichungstag der Anmeldung: 13.11.1996
(73) Patentinhaber: Wärtsilä NSD Schweiz AG, 8401 Winterthur (CH)
(72) Erfinder: Geist, Markus, CH-8050 Zürich (CH)
(74) Vertreter: Sulzer Management AG

(56) Entgegenhaltungen:
- EP-A- 0 392 545
- DE-A- 2 835 099
- DE-A- 3 504 699
- DE-A- 3 508 577
- DE-A- 4 225 444
- GB-A- 2 076 889
- GB-A- 2 109 457

## Beschreibung

Die Erfindung betrifft ein Verfahren zum Mischen und Fördern einer Emulsion für eine Dieselbrennkraftmaschine gemäss dem Oberbegriff von Anspruch 1. Die Erfindung betrifft weiter eine Vorrichtung zum Mischen und Fördern einer Emulsion für eine Dieselbrennkraftmaschine gemäss Anspruch 5.

Es ist bekannt, z.B. aus DE 4225444, den Ausstoss von Stickoxiden (NOx) beim Betrieb von Dieselbrennkraftmaschinen dadurch zu reduzieren, dass die Verbrennungstemperatur innerhalb eines Zylinders gesenkt wird indem eine Wassereinspritzung in den Verbrennungsraum erfolgt. Ein solches Vorgehen weist den Nachteil auf, dass zusätzlich zu einer Vorrichtung für die Brennstoffeinspritzung eine zweite Vorrichtung zum Einspritzen von Wasser erforderlich ist.

Es ist weiter bekannt, z.B. aus GB 2 109 457, den Ausstoss von Stickoxiden beim Betrieb von Dieselbrennkraftmaschinen dadurch zu reduzieren, dass das Wasser und der Brennstoff zu einer Wasser-Brennstoff-Emulsion gemischt werden und diese Emulsion mit einer konventionellen Brennstoffpumpe in den Zylinder gefördert wird. Dabei vergrössert sich die von der Brennstoffpumpe zu fördernde Menge entsprechend dem Volumen des beigemischten Wassers. Eine solche Vorrichtung weist den Nachteil auf, dass entweder das gesamte Einspritzsystem an das maximal zu fördernde Volumen anzupassen ist, was sehr hohe Kosten verursacht und einen erhöhten Platzbedarf erfordert, oder dass die Förderkapazität des Einspritzsystems unverändert belassen wird und eine um das Volumen des beigemischten Wassers reduzierte Brennstoffmenge maximal förderbar ist, was zur Folge hat, dass der Motor nur noch mit einer reduzierten Leistung betreibbar ist.

Es ist Aufgabe der vorliegenden Erfindung ein Verfahren sowie eine Vorrichtung zum Mischen und Fördern einer Emulsion bestehend aus Wasser und Brennstoff sowie ein Verfahren zum Betrieb einer Dieselbrennkraftmaschine vorzuschlagen, welche die genannten Nachteile überwindet.

Diese Aufgabe wird gelöst mit einem Verfahren gemäss den Merkmalen von Anspruch 1. Die Unteransprüche 2 bis 5 beziehen sich auf weitere vorteilhafte Ausgestaltungen des Verfahrens. Die Aufgabe wird weiter gelöst mit einer Vorrichtung gemäss den Merkmalen von Anspruch 6.

Das erfindungsgemässe Verfahren mischt eine Emulsion bestehend aus Wasser und Brennstoff und führt die Emulsion einer Dieselbrennkraftmaschine, insbesondere einem Grossdieselmotor, zu, wobei mit einem Sensor ein Zustand der Dieselbrennkraftmaschine gemessen wird und in Abhängigkeit von diesem Sensorsignal die Zusammensetzung der Emulsion, d.h. Anteil Wasser und Brennstoff, verändert wird, derart, dass die gesamte geförderte Menge Emulsion konstant oder annähernd konstant gehalten wird.

Bei Dieselbrennkraftmaschinen werden Einspritzpumpen verwendet, um den Brennstoff unter hohem Druck in den Verbrennungsraum einzuspritzen. Konventionelle, für Dieselmotoren eingesetzte Einspritzpumpen, wie sie auch bei dem vorliegenden, erfindungsgemässen Verfahren angewendet werden, weisen, wenn der Dieselmotor bei Teillast betrieben wird, bezüglich der Fördermenge eine Überkapazität auf. Das erfindungsgemässe Verfahren nutzt diese vorhandene Überkapazität, um der Brennstoffmenge eine zusätzliche Wassermenge beizumischen und die resultierende Brennstoff-Wasser-Emulsion zu fördern. Die Summe der Wasser- und der Brennstoffmenge bleibt dabei über dem Lastbereich des Dieselmotors konstant und die Einspritzpumpe wird ständig im Bereich der maximalen Fördermenge betrieben. Die dem Motor zugeführte Brennstoffmenge wird somit nicht mehr über die Fördermenge der Brennstoffpumpe sondern über die dem Brennstoff zugemischte Wassermenge gesteuert.

Das erfindungsgemässe Verfahren weist den Vorteil auf, dass dem Dieselmotor mit zunehmender Teillast eine grössere Menge Wasser zugeführt wird, was die Bildung von Stickoxiden reduziert. Ein derart betriebener Dieselmotor erweist sich aus ökologischer Sicht als besonders günstig, weil der Dieselmotor insbesondere in Küstenregionen und innerhalb von Häfen mit Teillast betrieben wird, wo die Emission von Stickoxiden besonders unerwünscht ist. Ein weiterer Vorteil des erfindungsgemässen Verfahrens ist darin zu sehen, dass die Förderkapazität des Einspritzsystems unverändert belassen werden kann, sodass bestehende Dieselmotoren einfach umrüstbar sind und bei neuen Dieselmotoren keine erhöhte Förderkapazität erforderlich ist. Das Verfahren weist den weiteren Vorteil auf, dass die Brennstoffeinspritzdüse, durch welche die Wasser-Brennstoff-Emulsion in den Brennraum eingespritzt wird, für die Zerstäubung der einzuspritzenden Emulsion über einen weiten Lastbereich optimal dimensionierbar ist, da die Menge der einzuspritzenden Wasser-Brennstoff-Emulsion über weite Lastbereiche konstant gehalten wird. Die Dimensionierung der Brennstoffdüse ist entscheidend für die Rauch- und Partikelemission eines Dieselmotors. Die über einen weiten Lastbereich konstante eingespritze Fluidmenge erlaubt eine optimale Dimensionierung und einen optimalen, schadstoffarmen Betrieb der Brennstoffeinspritzdüse.

Bei einem unteren Teillastbereich, in der Regel bei einer Teillast unter 50% der Maximallast, kann die eingespritze Fluidmenge nicht mehr konstant gehalten werden, da der Anteil der Mange Wasser zu gross wird. Es gibt ein vorgegebenes maximales Verhältnis Wasser/Brennstoff, oberhalb dessen ein einwandfreier Motorbetrieb nicht mehr gewährleistet werden kann. Wenn dieses Verhältnis überschritten würde muss sowohl Brennstoffmenge als auch die zugemischte Wassermenge synchron reduziert werden, so dass ein vorgebbares maximales Verhältnis nicht überschritten wird. Dadurch ist eine Dieselbrennkraftmaschine in ihrem gesamten Lastbereich, von einer minimalen Last bis zu einer Maximallast, betreibbar.

Die Erfindung wird anhand der nachfolgenden Figuren ausführlich beschrieben. Es zeigen:
- Fig. 1: Ein Diagramm der Fördermenge in Funktion der Motorleistung;
- Fig. 2: eine vereinfachte Vorrichtung zum Mischen und Fördern einer Emulsion;
- Fig. 3: eine weitere Vorrichtung zum Mischen und Fördern einer Emulsion.

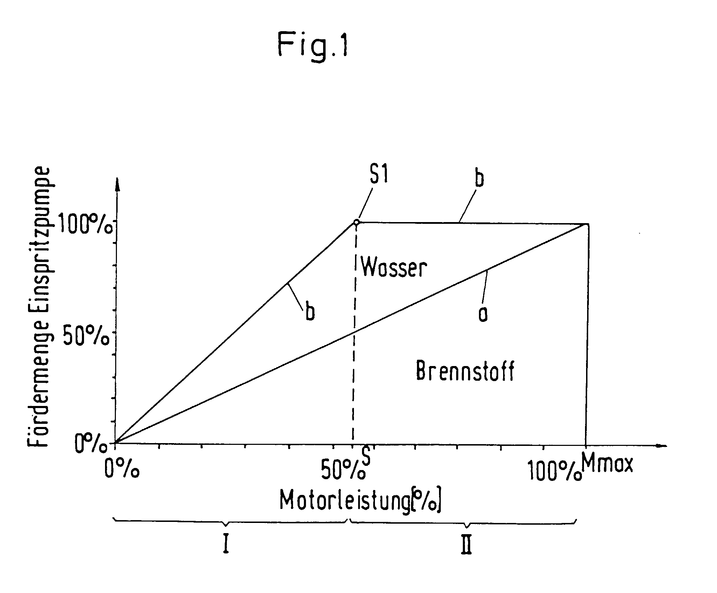

In Fig. 1 ist die Fördermenge der Einspritzpumpe in Funktion der Motorleistung dargestellt. Die Gerade a zeigt eine konventionell betriebene Einspritzpumpe, bei welcher die gesamte geförderte Fluidmenge nur aus Brennstoff besteht, wobei die geförderte Menge in Abhängigkeit der Motorleistung verändert wird. Der Verlauf der Geraden b zeigt das erfindungsgemässe Verfahren zum Mischen und Fördern einer Emulsion bestehend aus Wasser und Brennstoff in Funktion der Motorleistung. Mit einem Sensor wird die Motorleistung der Dieselbrennkraftmaschine erfasst. In einem unteren Motorleistungsbereich I, von etwa 0% bis 50% der Vollast, wird proportional zur geförderten Brennstoffmenge a eine zusätzliche Menge Wasser beigemischt, sodass die gesamte zur Einspritzpumpe geförderte Wasser-Brennstoff-Emulsion einer Menge gemäss dem Verlauf der Geraden b entspricht. Im Motorleistungsbereich I würde ein zu grosser Anteil Wasser einen einwandfreien Motorbetrieb nicht mehr gewährleisten, sodass sowohl die Brennstoffmenge als auch die zugemischte Wassermenge synchron verändert werden. Bei der Motorleistung S entspricht die geförderte Menge Emulsion der Nennfördermenge der Einspritzpumpe. Im oberen Motorleistungsbereich II, der von S bis zu einer maximalen Motorleistung Mmax verläuft, wird die gesamte zur Einspritzpumpe geförderte Emulsionsmenge, entsprechen dem Verlauf der Kurve b, konstant gehalten. Dabei wird die Brennstoffmenge in Funktion der Motorleistung entsprechend dem Verlauf der Kurve a verändert, und die zusätzlich beigefügte Menge Wasser derart geregelt, dass die gesamte Menge der Wasser-Brennstoff-Emulsion konstant oder annähernd konstant gehalten wird.

In der Darstellung gemäss Fig. 1 wird die Menge sowie die Zusammensetzung der Wasser-Brennstoff-Emulsion in Funktion der Motorleistung verändert. Anstelle der Motorleistung ist jedoch auch eine andere für den Betrieb der Dieselbrennkraftmaschine relevante Grösse verwendbar, insbesondere die folgenden mit Hilfe von Sensoren erfassbaren Grössen wie Motordrehzahl, Spühlluftdruck, Verbrennungsdruck in einem Zylinder, Abgastemperatur, Konzentration spezifischer Komponenten im Abgas oder Drehmoment. Weiter lassen sich aus den gemessenen Grössen mit Hilfe einer Regelvorrichtung weitere Zustandgrössen der Dieselbrennkraftmaschine berechnen, die sich ebenfalls zur Regelung der Maschine sowie der Zusammensetzung der Wasser-Brennstoff-Emulsion eignen.

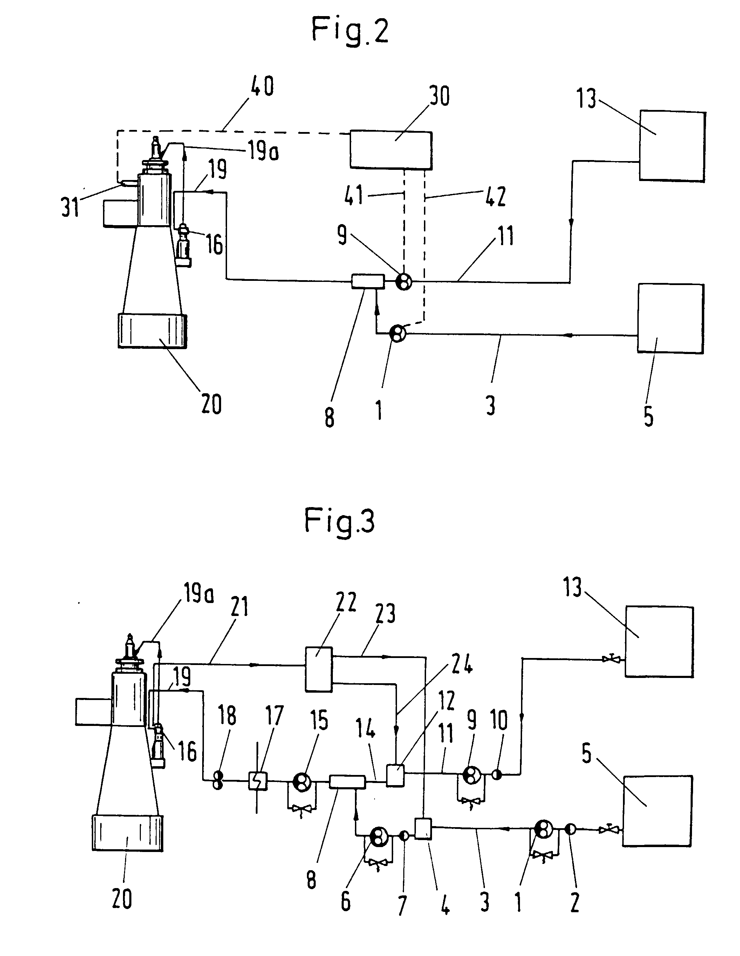

Fig. 2 zeigt eine vereinfacht dargestellte Vorrichtung zum Mischen und Fördern einer Emulsion bestehend aus Brennstoff und Wasser. Ein Sensor 31 zum Erfassen eines Zustandes der Dieselbrennkraftmaschine ist über eine Signalleitung 40 mit einer Regelvorrichtung 30 verbunden. Die Drehzahl zweier Förderpumpen 1,9 wird über je eine Signalleitung 41, 42 durch die Regelvorrichtung 30 bestimmt. Von einem mit Brennstoff gefüllten Tank 13 wird über eine Leitung 11 und die nachgeschaltete Förderpumpe 9 einer Emulgieranlage 8 Brennstoff zugeführt. Von einem mit Wasser gefüllten Tank 5 wird über eine Leitung 3 und die nachgeschaltete Förderpumpe 1 Wasser der Emuligeranlage 8 zugeführt, welche das Wasser in nicht näher dargestellten Weise mit dem Brennstoff zu einer Wasser-Brennstoff-Emulsion vermischt. Diese Emulsion wird über eine Leitung 19 einer Einspritzpumpe 16 zugeführt, welche die Emulsion über eine Leitung 19a in nicht näher dargestellter Form in den Brennraum einer Dieselbrennkraftmaschine 20 fördert. Die Regelvorrichtung 30 überwacht den Sensor 31 sowie ev. weitere vorhandene Sensoren und steuert die Förderpumpen 1, 9 derart, dass die geförderte Menge der Wasser-Brennstoff-Emulsion, wie in Fig. 1 dargestellt, in einem Bereich II eine konstante Menge mit variablen Anteilen an Wasser und Brennstoff aufweist, und in einem Bereich I eine variable Menge mit konstanten Anteilen an Wasser und Brennstoff aufweist.

Fig. 3 zeigt eine weitere, ausführlicher ausgestaltete Vorrichtung. Das Wasser wird mittels der Förderpumpe 1, welcher ein Filter 2 vorgeschaltet ist, durch die Leitung 3 in einen Puffertank 4 gefördert, wobei der Tank 5 als Wasservorlage dient. Aus dem Puffertank 4 wird das Wasser mittels einer durch die Regelvorrichtung 30 geregelte Dosierpumpe 6, welcher ein Filter 7 vorgeschaltet ist, in die Emulgieranlage 8 gefördert, in welcher das Wasser in nicht näher dargestellten Weise mit dem Brennstoff vermischt wird. Der Brennstoff wird mittels der Förderpumpe 9, welcher ein Filter 10 vorgeschaltet ist, durch die Leitung 11 in einen Brennstoffpuffertank 12 geführt, wobei der Tank 13 als Brennstoffvorlage dient. Aus dem Brennstoffpuffertank 12 wird der Brennstoff mittels einer Leitung 14 in die Emulgieranlage 8 geführt. Die in Abhängigkeit der geforderten Motorleistung gesteuerte Fördermenge der Dosierpumpe 6 bestimmt den sich in der Emulgieranlage 8 einstellenden Wasseranteil der Wasser-Brennstoff-Emulsion. Nach der Emulgieranlage 8 wird die Wasser-Brennstoff-Emulsion mittels einer Hochdruckpumpe 15 zur Einspritzpumpe 16 gefördert, wobei die Wasser-Brennstoff-Emulsion wahlweise durch einen Erhitzer 17 und/oder ein Filter 18 geführt werden kann. Von der Einspritzpumpe 16 wird die Wasser-Brennstoff-Emulsion durch die Leitung 19a in nicht näher dargestellter Weise in den Brennraum der Dieselbrennkraftmaschine 20 gefördert. Die überschüssige Wasser-Brennstoff-Emulsion, welche von der Hochdruckpumpe 15 zur Einspritzpumpe 16 gefördert wird, wird mittels einer Rücklaufleitung 21 in eine Separierungsanlage 22 gefördert, in welcher die Wasser-Brennstoff-Emulsion wieder in die Komponenten Wasser und Brennstoff aufgeteilt wird. Das Wasser wird durch eine Leitung 23 in den Puffertank 4 geführt. Der Brennstoff wird durch eine Leitung 24 in den Brennstoffpuffertank 12 geführt. Die Förderpumpen 1, 9, 6, 15, 16 sind über elektrische Signalleitungen mit der nicht dargestellten Regelvorrichtung 30 verbunden und werden von dieser angesteuert. Weiter werden von der Regelvorrichtung 30 mit Hilfe von Sensoren 31 Prozessgrössen erfasst, um die Förderpumpen entsprechend anzusteuern.

Je nachdem welche Brennstoffqualität verwendet wird kann es erforderlich sein, der Wasser-Brennstoff-Emulsion einen Emulgator beizumischen, um die Stabilität der Wasser-Brennstoff-Emulsion zu gewährleisten. Bei Verwendung von hochviskosen Brennstoffen ist es zudem erforderlich, das Brennstoffsystem als ein geschlossenes System auszulegen, da in diesem Fall der Brennstoff bzw. die Wasser-Brennstoff-Emulsion auf Temperaturen von über 100°C aufzuwärmen ist, um von der Einspritzpumpe förderbar zu sein.

## Patentansprüche

1. Verfahren zum Mischen und Fördern einer Emulsion bestehend aus Wasser und Brennstoff für eine Dieselbrennkraftmaschine, bei welchem mit einem Sensor eine Zustandsgrösse der Dieselbrennkraftmaschine, insbesondere eine Motorleistung, ermittelt wird, und der Anteil Wasser und Brennstoff der Emulsion in Abhängigkeit der Zustandsgrösse verändert wird, dadurch gekennzeichnet, dass oberhalb eines vorgebbaren Schwellenwertes (S) für die Zustandsgrösse die gesamte geförderte Menge Emulsion konstant oder annähernd konstant gehalten wird und dass unterhalb des vorgebbaren Schwellenwertes (S), die geförderte Menge Emulsion abhängig vom gemessenen Signal verändert wird, indem sowohl die Brennstoffmenge als auch die zugemischte Wassermenge reduziert werden.

2. Verfahren nach Anspruch 1, dadurch gekennzeichnet, dass unterhalb des vorgebbaren Schwellenwertes (S) sowohl der Anteil Wasser als auch der Anteil Brennstoff proportional zur Zustandgrösse verändert wird.

3. Verfahren nach einem der Ansprüche 1 oder 2, dadurch gekennzeichnet, dass das mit dem Sensor gemessene Signal mindestens eines der folgenden Grössen umfasst,
- Motorendrehzahl
- Spühlluftdruck
- Verbrennungsdruck in einem Zylinder
- Abgastemperatur
- Konzentration spezifischer Komponenten im Abgas
- Drehmoment.

4. Verfahren nach einem der Ansprüche 1 bis 3, dadurch gekennzeichnet, dass die Dieselbrennkraftmaschine bei konstanter geförderter Menge Emulsion durch ein Veränderung des Verhältnisses zwischen Anteil Wasser und Anteil Brennstoff geregelt wird.

5. Verfahren nach einem der Ansprüche 1 bis 4, dadurch gekennzeichnet, dass das Verhältnis zwischen Anteil Wasser und Anteil Brennstoff der Emulsion derart geregelt wird, dass das Abgas der Dieselbrennkraftmaschine einen minimalen Anteil an Stickoxyden enthält.

6. Vorrichtung zum Mischen und Fördern einer Emulsion zum Betrieb einer Dieselbrennkraftmaschine umfassend eine Förderpumpe (1) zum Fördern von Wasser sowie eine Förderpumpe (9) zum Fördern von Brennstoff in eine Emulgieranlage (8), sowie eine Leitung 19, über welche die in der Emulgieranlage erzeugte Emulsion einer Einspritzpumpe (16) zugeführt wird, welche die Emulsion in den Brennraum einer Dieselbrennkraftmaschine fördert, sowie umfassend eine Steuer- und Regelvorrichtung (30), die über eine Signalleitung (40) mit einem Sensor (31) zum Erfassen eines Zustandes der Dieselbrennkraftmaschine verbunden ist, und die über Signalleitungen (41,42) mit den Förderpumpen (1,9) verbunden ist, wobei die Steuer-und Regelvorrichtung (30) das Verhältnis von Anteil Wasser und Anteil Brennstoff der erzeugten Emulsion derart regelt, dass oberhalb eines vorgebbaren Schwellenwertes (S) für die Zustandsgrösse die gesamte geförderte Menge Emulsion konstant oder annähernd konstant gehalten wird und dass unterhalb des vorgebbaren Schwellenwertes (S) die geförderte Menge Emulsion abhängig vom gemessenen Signal verändert wird, indem sowohl die Brennstoffmenge als auch die zugemischte Wassermenge reduziert werden.

7. Dieselbrennkraftmaschine, insbesondere Grossdieselmotor, aufweisend eine Vorrichtung nach Anspruch 6.

## Claims

1. Method of mixing and conveying an emulsion consisting of water and fuel for an internal combustion diesel engine, in which a state parameter of the internal combustion diesel engine, in particular the engine power, is determined with a sensor and the proportion of water and fuel of the emulsion is changed in dependence on the state parameter, characterized in that above a predeterminable threshold (S) for the state parameter the total required quantity of emulsion is kept constant or approximately constant, and in that below the predeterminable threshold value (S) the required quantity of emulsion is varied in dependence on the measured signal, in that both the quantity of fuel and also the admixed quantity of water is reduced.

2. Method in accordance with claim 1, characterised in that below the predeterminable threshold (S) the proportion of water and also the proportion of fuel is varied in proportion to the state parameter.

3. Method in accordance with one of the claims 1 or 2, characterised in that the signal measured with the sensor includes at least one of the following parameters
- speed of rotation of the engine
- scavenging air pressure
- combustion pressure in a cylinder
- exhaust temperature
- concentration of specific components in the exhaust gas
- torque.

4. Method in accordance with one of the claims 1 to 3, characterised in that the internal combustion Diesel engine is regulated with a constant required quantity of emulsion by change of the ratio between the proportion of water and the proportion of fuel.

5. Method in accordance with one of the claims 1 to 4, characterised in that the ratio between the proportion of water and the proportion of fuel of the emulsion is regulated in such a way that the exhaust gas of the internal combustion diesel engine has a minimum proportion of nitrogen oxides.

6. Apparatus for the mixing and conveying of an emulsion for the operation of an internal combustion diesel engine, comprising a forwarding pump (1) for conveying water and also a forwarding pump (9) for conveying fuel into an emulsifying system (8), and also a line (19), via which the emulsion produced in the emulsifying system (8), is supplied to an injection pump (16) which supplies the emulsion into the combustion chamber of an internal combustion Diesel engine, and also comprising a control and regulating device (30) which is connected via a signal line (40) to a sensor (31) for detecting a state of the internal combustion Diesel engine and which is connected via signal lines (41, 42) to the forwarding pump (1, 9), wherein the control and regulating device (30) regulates the ratio of the proportion of water and the proportion of fuel of the emulsion that is produced such that above a predeterminable threshold (S) for the state parameter the total required quantity of emulsion is kept constant or approximately constant, and in that below the predeterminable threshold value (S) the required quantity of emulsion is varied in dependence on the measured signal, in that both the quantity of fuel and also the admixed quantity of water is reduced.

7. Internal combustion diesel engine, in particular large diesel engine, having an apparatus in accordance with claim 6.

## Revendications

1. Procédé pour mélanger et convoyer une émulsion constituée d'eau et de combustible pour un moteur à combustion interne diesel, dans lequel il est détecté par un capteur une grandeur d'état du moteur à combustion interne diesel, notamment une puissance du moteur, et la part en eau et en combustible de l'émulsion est modifiée en fonction de la grandeur d'état, caractérisé en ce que, au-delà d'une valeur seuil pouvant être prédéterminée (S) pour la grandeur d'état, toute la quantité d'émulsion convoyée est maintenue constante ou approximativement constante, et en ce que, en dessous de la valeur seuil apte à être prédéterminée (S), la quantité d'émulsion convoyée est modifiée en fonction du signal mesuré en réduisant à la fois la quantité de combustible et la quantité d'eau ajoutée.

2. Procédé selon la revendication 1, caractérisé en ce que, en dessous de la valeur seuil apte à être prédéterminée (S), à la fois la part en eau et la part en combustible est modifiée proportionnellement à la grandeur d'état.

3. Procédé selon l'une des revendications 1 ou 2, caractérisé en ce que le signal mesuré avec le capteur comprend au moins l'une des grandeurs suivantes,
- nombre de tours du moteur
- pression d'air de rinçage
- pression de combustion dans un cylindre
- température des gaz d'échappement
- concentration de composantes spécifiques dans les gaz d'échappement
- couple de rotation.

4. Procédé selon l'une des revendications 1 à 3, caractérisé en ce que le moteur à combustion interne diesel, pour une quantité d'émulsion constante convoyée, est réglée par une modification du rapport entre la part en eau et la part en combustible.

5. Procédé selon l'une des revendications 1 à 4, caractérisé en ce que le rapport entre la part en eau et la part en combustible de l'émulsion est réglé de façon que les gaz d'échappement du moteur à combustion interne diesel contiennent une part minimale en oxydes d'azote.

6. Dispositif pour mélanger et convoyer une émulsion pour le fonctionnement d'un moteur à combustion interne diesel, comprenant une pompe de convoyage (1) pour convoyer de l'eau ainsi qu'une pompe de convoyage (9) pour convoyer du combustible dans une émulsionneuse (8), ainsi qu'un conduit (19) par lequel l'émulsion produite dans l'émulsionneuse est acheminée à une pompe d'injection (16) qui convoie l'émulsion dans l'enceinte de combustion d'un moteur à combustion interne diesel, et comprenant également un dispositif de commande et de réglage (30) qui est relié par une ligne de signaux (40) à un capteur (31) pour détecter un état du moteur à combustion interne diesel, et qui est relié par des lignes de signaux (41, 42) aux pompes de convoyage (1, 9), où le dispositif de commande et de réglage (30) règle le rapport de la part en eau et de la part en combustible de l'émulsion produite de façon que, au-delà d'une valeur seuil prédéfinissable (S) pour la grandeur d'état, toute la quantité d'émulsion convoyée soit maintenue constante ou approximativement constante et que, en dessous de la valeur seuil prédéfinissable (S), la quantité d'émulsion convoyée est modifiée en fonction du signal mesuré en réduisant à la fois la quantité de combustible ainsi que la quantité d'eau ajoutée.

7. Moteur à combustion interne diesel, notamment grand moteur diesel, présentant un dispositif selon la revendication 6.
